(19) Europäisches Patentamt / European Patent Office / Office européen des brevets

(11) **EP 4 163 124 A1**

(12) **EUROPEAN PATENT APPLICATION**
published in accordance with Art. 153(4) EPC

(43) Date of publication:
**12.04.2023 Bulletin 2023/15**

(21) Application number: **21821777.6**

(22) Date of filing: **27.05.2021**

(51) International Patent Classification (IPC):
**B60C 1/00** (2006.01)    **C08L 7/00** (2006.01)
**C08L 9/00** (2006.01)    **C08K 3/04** (2006.01)
**C08K 3/36** (2006.01)    **B60C 3/00** (2006.01)
**B60C 9/18** (2006.01)    **B60C 9/20** (2006.01)

(52) Cooperative Patent Classification (CPC):
**B60C 1/00; B60C 3/00; B60C 9/18; B60C 9/20; C08K 3/04; C08K 3/36; C08L 7/00; C08L 9/00**

(86) International application number:
**PCT/JP2021/020249**

(87) International publication number:
**WO 2021/251167 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2020 JP 2020099683**

(71) Applicant: **BRIDGESTONE CORPORATION**
**Chuo-ku**
**Tokyo 104-8340 (JP)**

(72) Inventor: **KANO, Norihisa**
**Tokyo 104-8340 (JP)**

(74) Representative: **Marks & Clerk LLP**
**15 Fetter Lane**
**London EC4A 1BW (GB)**

(54) **PNEUMATIC TIRE**

(57)    Provided is a pneumatic tire that has excellent durability and achieves both high load capacity and space-saving properties. This disclosure provides a pneumatic tire to be mounted on a vehicle, which includes a tread in contact with a road surface and a belt layer provided inside the tread in the tire radial direction, where the pneumatic tire has an outer diameter of 350 mm or more and 600 mm or less, and when the rim width of a rim wheel assembled to the pneumatic tire is defined as RW, and the tire cross-sectional width of the pneumatic tire is defined as SW, they satisfy the relationship of

$$0.78 \leq RW/SW \leq 0.88,$$

and and the pneumatic tire uses a rubber composition containing a rubber component containing 50 % by mass or more of natural rubber and/or synthetic isoprene rubber, and syndiotactic 1,2-polybutadiene.

FIG. 2

EP 4 163 124 A1

**Description**

TECHNICAL FIELD

This disclosure relates to a pneumatic tire.

BACKGROUND

Rubber compositions used for producing rubber articles such as tires are generally required to have high durability such as cut resistance. Examples of technologies aimed at improving the durability of rubber include the one described in WO/2003/093337 (PTL 1). PTL 1 develops a technology that enhances the durability by double network gel, which is a semi-interpenetrating network structure hydrogel or interpenetrating network structure hydrogel obtained by introducing a second monomer component into a network structure formed by polymerizing and cross-linking a first monomer component and polymerizing and optionally cross-linking the second monomer component, where 10 mol% or more of the first monomer component is a charged unsaturated monomer, and 60 mol% or more of the second monomer component is an electrically neutral unsaturated monomer, the amount of the first monomer component: the amount of the second monomer component is in a molar ratio of 1:2 to 1:100, and when polymerizing and cross-linking the second monomer component, the degree of cross-linking is set smaller than when polymerizing and cross-linking the first monomer component.

In recent years, a new small shuttle bus that mainly focuses on transportation of people and goods in the city has been proposed. Although this shuttle bus is small (approximately 5 meters long and 2 meters wide), it is assumed that the gross vehicle weight may exceed 3 tons. Therefore, pneumatic tires to be mounted on such a vehicle are required to have high load capacity and space-saving properties, and it is desired to develop a technology to achieve the above-described high fuel efficiency as well as rubber strength.

CITATION LIST

Patent Literature

PTL 1: WO/2003/093337

SUMMARY

(Technical Problem)

It could thus be helpful to provide a pneumatic tire that has excellent durability and achieves both high load capacity and space-saving properties.

(Solution to Problem)

The pneumatic tire of this disclosure is a pneumatic tire to be mounted on a vehicle, including a tread in contact with a road surface and a belt layer provided inside the tread in the tire radial direction, where

the pneumatic tire has an outer diameter of 350 mm or more and 600 mm or less, and when the rim width of a rim wheel assembled to the pneumatic tire is defined as RW, and the tire cross-sectional width of the pneumatic tire is defined as SW, they satisfy the relationship of $0.78 \leq RW/SW \leq 0.88$, and
the pneumatic tire uses a rubber composition containing a rubber component containing 50 % by mass or more of natural rubber and/or synthetic isoprene rubber, and syndiotactic 1,2-polybutadiene, where the syndiotactic 1,2-polybutadiene has a crystal content of 7 J/g to 40 J/g and a number average molecular weight of $3.0 \times 10^4$ or more.

(Advantageous Effect)

According to this disclosure, it is possible to provide a pneumatic tire that has excellent durability and achieves both high load capacity and space-saving properties.

BRIEF DESCRIPTION OF THE DRAWINGS

In the accompanying drawings:

FIG. 1 is an overall schematic side view of a vehicle equipped with tires;

FIG. 2 is a cross-sectional view of a pneumatic tire and a rim wheel according to one embodiment of this disclosure;

FIG. 3 a cross-sectional view in the tire width direction of a pneumatic tire according to one embodiment of this disclosure;

FIG. 4A is a single perspective view of a belt layer during production;

FIG. 4B is a single perspective view of a belt layer after production; and

FIG. 5 is a diagram illustrating typical tire size positioning based on a combination of tire shape (tire outer diameter OD and tire width SW) and rim wheel shape (rim diameter RD and rim width RW)

DETAILED DESCRIPTION

The following describes the pneumatic tire of this disclosure in detail with reference to the drawings.

(1) Schematic configuration of a vehicle equipped with pneumatic tires

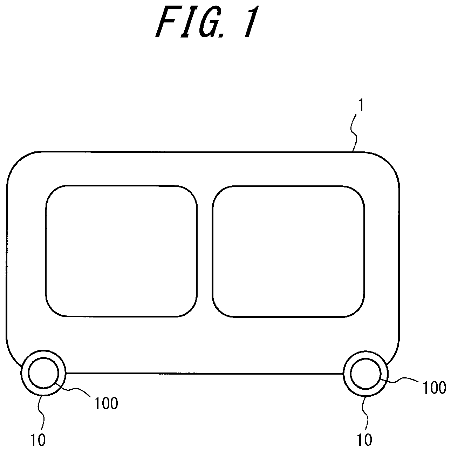

FIG. 1 is an overall schematic side view of a vehicle equipped with tires. As illustrated in FIG. 1, the vehicle 1 is a four-wheel vehicle in this embodiment. The vehicle 1 is not limited to a four-wheel vehicle, and it may have a six-wheel configuration or an eight-wheel configuration, for example.

The vehicle 1 is equipped with a predetermined number of pneumatic tires 10 according to the wheel configuration. Specifically, the pneumatic tires 10 assembled to a rim wheel 100 are mounted on the vehicle 1 at predetermined positions.

The vehicle 1 is a new small shuttle bus that mainly focuses on transportation of people and goods in the city. In this embodiment, the new small shuttle bus is assumed to be a vehicle with a total length of 4 m to 7 m, a total width of approximately 2 m, and a gross vehicle weight of approximately 3 tons. However, the size and the gross vehicle weight are not necessarily limited to the above ranges and may deviate from the ranges to some extent.

The small shuttle bus is not necessarily limited to transportation of people. It may be used for transportation of goods, mobile stores, mobile offices, and the like.

Because the small shuttle bus mainly focuses on transportation of people and goods in the city, it is assumed to run at a relatively low running speed (maximum speed of 70 km/h or less, average speed of about 50 km/h). Therefore, measures to prevent hydroplaning may not be emphasized.

In this embodiment, the vehicle 1 is preferably an electric vehicle having an automatic driving function (assuming it is at level four or higher). However, the automatic driving function is not essential, and the vehicle 1 does not have to be an electric vehicle.

When the vehicle 1 is an electric vehicle, it is preferable to use an in-wheel motor (not illustrated in the drawings) as a power unit. With regard to the in-wheel motor, the entire unit may be provided in the inner space of the rim wheel 100, or part of the unit may be provided in the inner space of the rim wheel 100.

When using an in-wheel motor, the vehicle 1 preferably has an independent steering function that allows each wheel to be steered independently. In this case, the vehicle can turn on the spot and move in the lateral direction, and a power transmission mechanism is unnecessary, which improves the space efficiency of the vehicle 1.

As described above, the vehicle 1 is required to have high space efficiency. Therefore, the pneumatic tire 10 preferably has a diameter as small as possible.

On the other hand, it is mounted on the vehicle 1 that has a suitable gross vehicle weight corresponding to the vehicle size and application, so that it is required to have high load capacity (maximum load capacity).

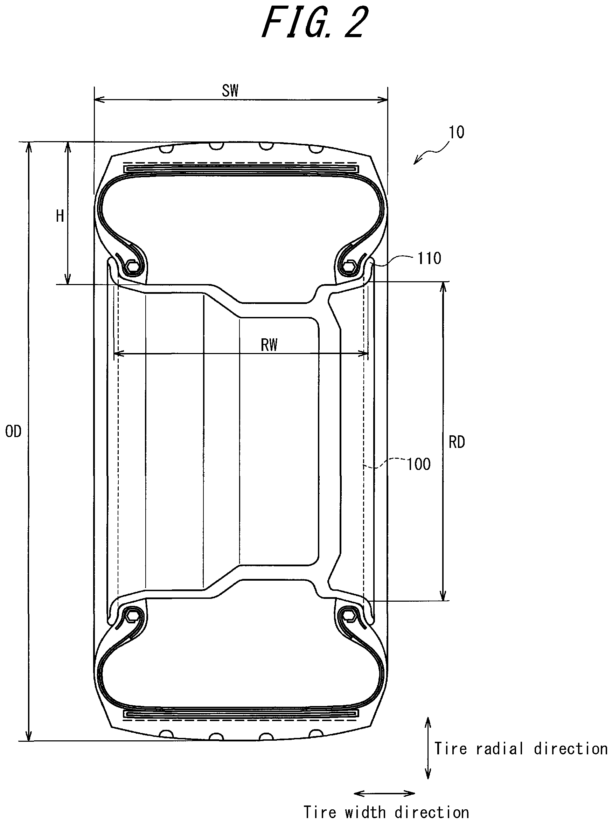

Therefore, to meet such requirements, the pneumatic tire 10 has a load capacity corresponding to the gross vehicle weight of the vehicle 1 while reducing the tire outer diameter OD (not illustrated in FIG. 1, see FIG. 2).

(2) Structure of pneumatic tire

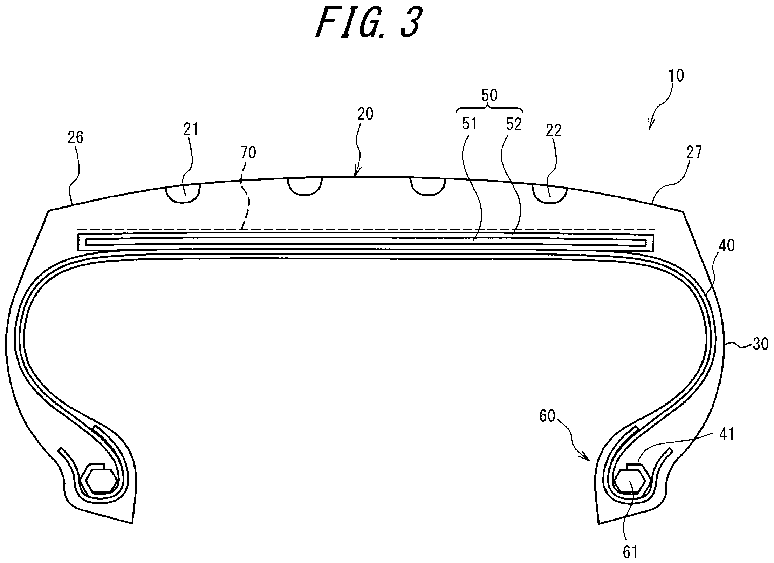

FIG. 2 is a cross-sectional view of the pneumatic tire 10 and the rim wheel 100. Specifically, FIG. 2 is a cross-sectional view of the pneumatic tire 10 assembled to the rim wheel 100 along the tire width direction and the tire radial direction. Note that in FIG. 2, the hatching display of the cross section is omitted (the same applies to FIG. 3 and subsequent figures).

The pneumatic tire 10 has a relatively small diameter but a large width. Specifically, the rim diameter RD, which is the diameter of the rim wheel 100, is preferably 12 inches or more and 17.5 inches or less. However, the rim diameter RD may be 10 inches or more and 22 inches or less as long as it satisfies other numerical ranges (formulas 2 and 3 below).

Note that the rim diameter RD is the outer diameter of a rim body portion of the rim wheel 100 and does not include a portion of a rim flange 110, as illustrated in FIG. 2.

The tire width SW of the pneumatic tire 10 is preferably 125 mm or more and 255 mm or less. As illustrated in FIG. 2, the tire width SW means the cross-sectional width of the pneumatic tire 10, and when the pneumatic tire 10 has a rim guard (not illustrated in the drawings), the rim guard portion is not included.

The aspect ratio of the pneumatic tire 10 is preferably 35 % or more and 75 % or less. The aspect ratio is calculated using the following (formula A).

$$\text{Aspect ratio (\%)} = \text{tire section height H/tire width SW (section width)} \times 100 \quad \text{(formula A)}$$

The tire outer diameter OD, which is the outer diameter of the pneumatic tire 10, is 350 mm or more and 600 mm or less. The tire outer diameter OD is preferably 500 mm or less.

When the tire outer diameter OD is such a size and the rim width of the rim wheel 100 assembled to the pneumatic tire 10 is the rim width RW, the pneumatic tire 10 satisfies the relationships of (formula B) and (formula C).

$$0.78 \le \text{RW/SW} \le 0.88 \quad \text{(formula B)}$$

$$0.56 \le \text{RD/OD} \le 0.66 \quad \text{(formula C)}$$

The pneumatic tire 10 that satisfies the above relationships can secure the air volume necessary to support the gross vehicle weight of the vehicle 1 while having a small diameter. Specifically, the air volume is preferably 20,000 $cm^3$ or more in consideration of load supporting performance. Further, it is preferably 80,000 $cm^3$ or less in consideration of saving space.

Instead of the RW, the distance D between bead heels in the tire width direction may be

$$0.78 \le \text{D/SW} \le 0.88.$$

The rim width RW is not particularly limited as long as the above relationship is satisfied. However, from the viewpoint of securing the air volume, the rim width RW is preferably as wide as possible.

From the same viewpoint of securing the air volume, a ratio of the rim diameter RD to the tire outer diameter OD is preferably small, that is, the aspect ratio is preferably high. However, as described above, a low aspect ratio is preferable from the viewpoint of responsiveness, and a large rim diameter RD is preferable in consideration of the accommodation space for an in-wheel motor or the like. Therefore, the aspect ratio and the rim diameter RD are in a trade-off relationship between the air volume, and the responsiveness and the accommodation space for an in-wheel motor and the like.

An example of a suitable size for the pneumatic tire 10 is 215/45R12. A suitable rim width is about 7.0 J.

Although not particularly limited, the set internal pressure (normal internal pressure) of the pneumatic tire 10 is assumed to be 400 kPa to 1,100 kPa and preferably 500 kPa to 900 kPa. The normal internal pressure is, for example, the air pressure corresponding to the maximum load capacity in the JATMA (Japan Automobile Tyre Manufacturers Association) YearBook in Japan, ETRTO in Europe, TRA in the United States, and tire standards in other countries.

The load born by the pneumatic tire 10 is preferably 500 kgf to 1,500 kgf, and it may be about 900 kgf, for example.

FIG. 3 is a single sectional view of the pneumatic tire 10. Specifically, FIG. 3 is a cross-sectional view of the pneumatic tire 10 along the tire width direction and the tire radial direction.

As illustrated in FIG. 3, the pneumatic tire 10 includes a tread 20, a tire side portion 30, a carcass 40, a belt layer 50, a bead portion 60, and a belt reinforcement layer 70.

The tread 20 is a portion that contacts a road surface. A pattern (not illustrated in the drawings) is formed on the tread 20 according to the service conditions of the pneumatic tire 10 and the type of vehicle on which the pneumatic tire 10 is to be mounted.

In this embodiment, the tread 20 is formed with a plurality of circumferential grooves including a circumferential main groove 21 and a circumferential main groove 22 extending in the tire circumferential direction.

The tire side portion 30 continues to the tread 20 and is positioned inside the tread 20 in the tire radial direction. The tire side portion 30 is an area from the outer end of the tread 20 in the tire width direction to the upper end of the bead portion 60. The tire side portion 30 is sometimes called a sidewall or the like.

The carcass 40 forms the skeleton of the pneumatic tire 10. The carcass 40 has a radial structure in which carcass cords (not illustrated in the drawings) radially arranged along the tire radial direction are covered with a rubber material. However, the structure is not limited to a radial structure, and a bias structure in which carcass cords are arranged so as to intersect in the tire radial direction may also be used.

The belt layer 50 is provided inside the tread 20 in the tire radial direction. The belt layer 50 includes a core belt 51 and a sheath belt 52.

The core belt 51 is provided from one shoulder portion 26 of the tread 20 to the other shoulder portion 27 of the tread 20. The shoulder portion 26 is an area outside the circumferential main groove 21 in the tire width direction, and the shoulder portion 27 is an area outside the circumferential main groove 22 in the tire width direction. That is, the shoulder portion 26 and the shoulder portion 27 are areas on the outer side in the tire width direction of the circumferential main grooves that are formed on the outermost side in the tire width direction.

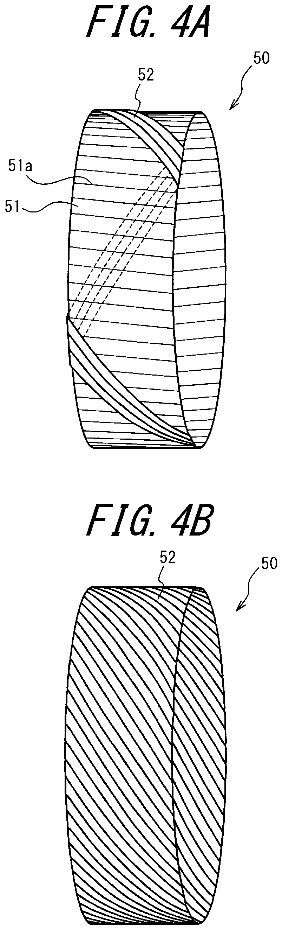

The core belt 51 is a belt in which belt cords 51a (not illustrated in FIG. 3, see FIG. 4A) inclined at a small angle with respect to the tire width direction are covered with rubber. The sheath belt 52 is a tape-shaped belt including cords (not illustrated in the drawings) and is wound around the core belt 51 all over the circumference. The belt layer 50 serves a similar function as interlaced belt layers. The configuration of the belt layer 50 will be further described later.

The bead portion 60 continues to the tire side portion 30 and is positioned inside the tire side portion 30 in the tire radial direction. The bead portion 60 is engaged with the rim wheel 100 and has an annular bead core 61. The carcass 40 is folded outward in the tire width direction via the bead core 61.

A folded end portion 41 of the carcass 40 folded at the bead portion 60 is provided so as to be wound along the bead core 61. The folded end portion 41 is in contact with the outer end of the bead core 61 in the tire radial direction. Specifically, at the folded end portion 41 of the carcass 40, the carcass cord is wound around the outer end of the bead core 61 in the tire radial direction.

The bead portion 60 may be provided with a bead filler outside the bead core in the tire radial direction, or be provided with a chafer that prevents the carcass 40 and the like folded at the bead portion 60 from rubbing against the rim wheel 100 and being worn.

(3) Configuration of belt layer 50

FIGS. 4A and 4B illustrate the configuration of the belt layer 50. Specifically, FIG. 4A is a single perspective view of the belt layer 50 during production, and FIG. 4B is a single perspective view of the belt layer 50 after production.

As described above, the belt layer 50 includes the core belt 51 and the sheath belt 52. As illustrated in FIG. 4A, the core belt 51 has belt cords 51a arranged along the tire width direction. The core belt 51 is an annular belt formed by coating a plurality of belt cords 51a with rubber.

The belt cord 51a is preferably slightly inclined with respect to the tire width direction, as illustrated in FIG. 4A. Specifically, the belt cord 51a is preferably inclined in the same direction as the inclination direction of the sheath belt 52 (which is upward to the left in FIG. 4A).

The sheath belt 52 is a tape-shaped belt with a width of about 1 cm, and it is spirally wound around the core belt 51 along the tire circumferential direction. Specifically, the sheath belt 52 is spirally wound around the core belt 51 along the tire circumferential direction at a predetermined distance equal to or larger than the width of the sheath belt 52.

The sheath belt 52 is wound a plurality of times in the tire circumferential direction so as not to overlap the adjacent sheath belt 52, so that it covers the outer surface of the core belt 51 in the tire radial direction and the inner surface of the core belt 51 in the tire radial direction.

The longitudinal ends (not illustrated in the drawings) of the tape-shaped sheath belt 52 are wound around the core belt 51 so as not to be positioned in the shoulder portions 26 and 27 and the central area (immediately below the tire equator line).

Further, the sheath belt 52 is wound around all over the circumference of the annular core belt 51 as illustrated in FIG. 4B.

In this embodiment, the belt layer 50 is composed only of the core belt 51 and the sheath belt 52. As described above, the belt layer 50 serves a similar function as interlaced belt layers. In this embodiment, one belt reinforcement layer 70 is arranged outside the belt layer 50, which includes the core belt 51 and the sheath belt 52, in the tire radial direction in the illustrated example. The belt reinforcement layer 70 may be, for example, one or more layers in which cords extending in the tire circumferential direction are coated with rubber. In the illustrated example, the width of the belt reinforcement layer 70 in the tire width direction is larger than the width of the belt layer 50 in the tire width direction, but it may be equal to or smaller than the width of the belt layer 50 in the tire width direction. When two or more belt reinforcement layers 70 are provided, they may be in a so-called cap-and-layer structure, and the belt reinforcement layer on the outer side in the tire radial direction may be provided only on the shoulder portion of each half in the tire width direction.

The number of the belt cords 51a driven into the core belt 51 is preferably 15 cords/50 mm or more and 30 cords/50 mm or less. Further, the number of the cords driven into the sheath belt 52 is preferably 10 cords/50 mm or more and 25 cords/50 mm or less. Moreover, the number of the driven belt cords 51a is preferably larger than the number of the cords driven into the sheath belt 52 (that is, the former is denser than the latter).

The angle between the belt cord 51a and the tire width direction is preferably 20 degrees or more and 60 degrees or less. The angle between the cord of the sheath belt 52 and the tire width direction is preferably 50 degrees or more and 80 degrees or less. Further, the angle between the cord of the sheath belt 52 and the tire width direction is preferably larger than the angle between the belt cord 51a and the tire width direction.

The number of turns of the sheath belt 52 in the tire circumferential direction is preferably 3 or more and 6 or less in consideration of ensuring performance and productivity.

(3) Functions and effects

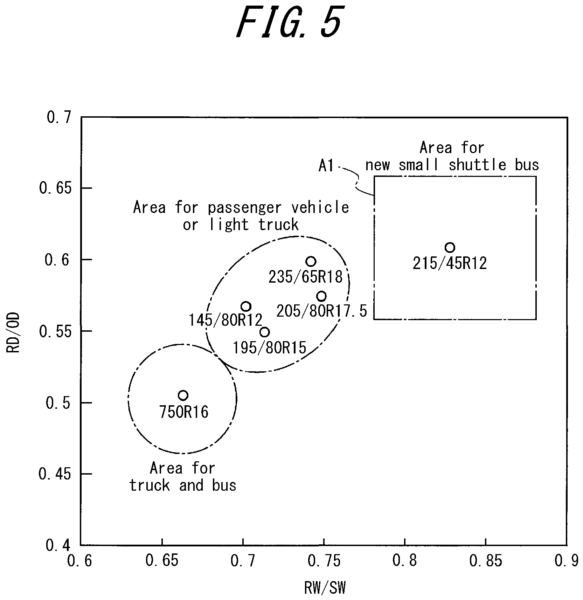

The following describes the functions and effects of the above-described pneumatic tire 10. FIG. 5 is a diagram illustrating typical tire size positioning based on a combination of tire shape (tire outer diameter OD and tire width SW) and rim wheel shape (rim diameter RD and rim width RW).

Specifically, the horizontal axis of the graph in FIG. 5 indicates a ratio (RW/SW) of the rim width RW and the tire width SW, and the vertical axis indicates a ratio (RD/OD) of the rim diameter RD and the tire outer diameter OD. In FIG. 5, typical tire size positions are plotted according to RW/SW and RD/OD values.

As illustrated in FIG. 5, both RW/SW and RD/OD are low in the area of tires for trucks and buses. Both RW/SW and RD/OD are higher in the area of tires for passenger vehicles or light trucks than in the area of tires for trucks and buses.

The area A1 includes 215/45R12, which is an example of a suitable size for the above-described pneumatic tire 10. The area A1 is in the ranges of $0.78 \leq RW/SW \leq 0.88$ and $0.56 \leq RD/OD \leq 0.66$ described above. Such an area A1 is positioned as an area of tires for new small shuttle buses that mainly focus on transportation of people and goods in the city, such as the vehicle 1 described above.

The RD/OD in the area of tires for new small shuttle buses is not significantly different from the RD/OD in the area of tires for passenger vehicles or light trucks, and the two areas overlap each other in one part. On the other hand, the RW/SW in the area of tires for new small shuttle buses is higher than the RW/SW in the area of tires for passenger vehicles or light trucks.

As described above, the tire outer diameter OD of the pneumatic tire 10 is 350 mm or more and 600 mm or less. Therefore, it has a sufficiently small diameter compared to the size of the vehicle 1 and can contribute to space saving in the vehicle 1.

The pneumatic tire 10 having a size included in the area A1 satisfies the relationship of

$$0.78 \leq RW/SW \leq 0.88,$$

and therefore the rim width RW is wide with respect to the tire width SW. In other words, a wide tire can be constructed, and it is easy to secure the air volume necessary for exhibiting high load capacity. If the rim width RW is too wide, the tire width SW also increases, which reduces the space efficiency and makes it easier for the bead portion 60 to come off the rim wheel 100.

Further, the pneumatic tire 10 having a size included in the area A1 satisfies the relationship of

$$0.56 \leq RD/OD \leq 0.66,$$

and therefore the rim diameter RD is large with respect to the tire outer diameter OD, making it easy to secure accommodation space for an in-wheel motor and the like. If the rim diameter RD is too small, the diameter size of a disc brake or drum brake decreases. As a result, the effective contact area of the brake decreases, making it difficult to secure the required braking performance.

That is, when the pneumatic tire 10 is mounted on the new small shuttle bus or the like, it is possible to achieve high space efficiency while providing higher load capacity.

The rim diameter RD of the pneumatic tire 10 is preferably 12 inches or more and 17.5 inches or less. As a result, a necessary and sufficient air volume and an accommodation space for an in-wheel motor and the like can be secured while maintaining a small diameter. Braking performance and driving performance can also be secured.

The tire width SW of the pneumatic tire 10 is preferably 125 mm or more and 255 mm or less. Further, the aspect ratio of the pneumatic tire 10 is preferably 35 % or more and 75 % or less. As a result, a necessary and sufficient air volume and an accommodation space for an in-wheel motor and the like can be secured.

In this embodiment, the belt layer 50 includes a core belt 51 provided from one shoulder portion 26 of the tread 20 to the other shoulder portion 27 of the tread 20, and a sheath belt 52 spirally wound around the core belt 51 along the tire circumferential direction, as described above.

Such a belt layer 50 has high rigidity, particularly at the shoulder portions 26 and 27 of the tread 20, as compared with common interlaced belt layers, and it is possible to effectively suppress the diameter growth of the shoulder portion, which is a concern for small-diameter tires such as the pneumatic tire 10.

Specifically, the tire outer diameter OD of the pneumatic tire 10 is small, so that, assuming that the tension of the carcass 40 is constant, the tension of the belt layer 50 is relatively lower than that of a tire having a large tire outer diameter OD. Therefore, the diameter of the tire increases remarkably especially in the shoulder portion where the belt layer has low rigidity.

Further, the pneumatic tire 10 has a low aspect ratio, so that the pulling force of the carcass 40 is larger in the tire width direction and the pulling force in the tire radial direction is relatively weak. For this reason, the diameter of the tire increases remarkably in the shoulder portion.

As described above, the pneumatic tire 10 should carry a large load and is set to have a high internal pressure corresponding to the gross vehicle weight. Therefore, there is a concern that the durability of the belt layer may deteriorate.

In the pneumatic tire 10, the belt layer 50 including the core belt 51 and the sheath belt 52 suppresses such diameter growth at the shoulder portions 26 and 27 of the tread 20.

That is, according to the pneumatic tire 10, the durability of the belt (belt layer 50) can be improved while achieving high load capacity and space saving properties.

In this embodiment, the longitudinal ends of the sheath belt 52 that is spirally wound are not positioned in the shoulder portions 26 and 27 (areas on the outer side in the tire width direction of the circumferential main grooves that are formed on the outermost side in the tire radial direction) or the central area (immediately below the tire equator line), which can suppress the occurrence of strain caused by the longitudinal ends of the sheath belt 52.

In this embodiment, the belt cord 51a is inclined in the same direction as the inclination direction of the sheath belt 52. As a result, the core belt 51 and the sheath belt 52 have similar properties when deformed, which improves the durability of the belt layer 50.

In this embodiment, the sheath belt 52 is a tape-shaped belt, and it is spirally wound around the core belt 51 along the tire circumferential direction at a predetermined distance equal to or larger than the width of the sheath belt 52. Further, the sheath belt 52 is wound a plurality of times in the tire circumferential direction, thereby covering the outer surface of the core belt 51 in the tire radial direction and the inner surface of the core belt 51 in the tire radial direction.

Therefore, it is possible to provide a belt layer 50 with high rigidity all over the circumference of the tire, particularly at the ends in the tire width direction. As a result, the durability of the belt layer 50 can be further improved.

In this embodiment, the belt layer 50 is composed only of the core belt 51 and the sheath belt 52. As described above, because the belt layer 50 including the core belt 51 and the sheath belt 52 can sufficiently suppress the diameter growth in the shoulder portions 26 and 27 of the tread 20, there is no need to further add a reinforcement belt or the like. As a result, the durability of the belt layer 50 can be improved while suppressing the weight increase of the pneumatic tire 10.

(4) Rubber composition of pneumatic tire

In addition to the above-described structure, this embodiment uses a rubber composition containing a rubber component containing 50 % by mass or more of natural rubber and/or synthetic isoprene rubber, and syndiotactic 1,2-polybutadiene, where the syndiotactic 1,2-polybutadiene has a crystal content of 7 J/g to 40 J/g and a number average molecular weight of $3.0 \times 10^4$ or more.

It is preferable that, after vulcanization, a so-called double network structure, in which syndiotactic 1,2-polybutadiene (hereinafter may be referred to as "sPB") forms a mesh-like three-dimensional network in a rubber component matrix of natural rubber or synthetic isoprene rubber, should be formed in the above-described rubber composition. The sPB is a kind of crystalline polymer, and its crystals sacrificially fracture under high strain to dissipate the input energy. Further, the sPB also has the property of being compatible with natural rubber and synthetic isoprene rubber. Therefore, it is possible to partially immobilize the sPB in the rubber component containing natural rubber and synthetic isoprene rubber, and a three-dimensional network (double network) including a sPB crystal part and a rubber component/sPB compatible part can be formed in the vulcanized rubber.

This double network structure provides a high energy dissipation effect due to the sPB crystal part and provides flexibility due to the rubber component/sPB compatible part. Therefore, a pneumatic tire using the rubber composition can achieve excellent wear resistance and cut resistance. Because the rubber composition uses a sPB having high crystallinity and a large molecular weight, crystal collapse does not occur at a low strain input that contributes to rolling resistance. Further, because the molecular weight is larger and the movement of terminal chains is less than that of other general-purpose resins, deterioration of fuel efficiency can also be suppressed.

A method of confirming whether or not the mesh-like three-dimensional network (double network) structure described above has been formed is not particularly limited. For example, the formation of a double network can be confirmed by confirming that the sPB has formed a co-continuous network structure in the matrix polymer of natural rubber and/or isoprene rubber based on a phase image of an atomic force microscope (AFM). Further, whether or not the double network has been formed can be inferred from the composition of the rubber composition before vulcanization and production conditions such as vulcanization temperature.

- Rubber component

The rubber composition contains 50 % by mass or more of natural rubber (NR) and/or synthetic isoprene rubber (IR) as a rubber component. When the rubber component contains 50 % by mass or more of at least one of natural rubber and synthetic isoprene rubber, the above-described sPB double network is formed in the rubber composition after vulcanization. As a result, when it is applied to a tire, the wear resistance and the cut resistance can be improved while maintaining good fuel efficiency.

The natural rubber (NR) and synthetic isoprene rubber (IR) have isoprene as a monomer and a cis-1,4-polyisoprene structure as a main component. The natural rubber may be derived from rubber trees or other plant sources. The isoprene monomer for synthesizing the synthetic isoprene rubber may be petroleum-derived or biomass-derived isoprene. From the same point of view, the content ratio of the natural rubber (NR) and/or synthetic isoprene rubber (IR) is preferably 60 % by mass or more, more preferably 70 % by mass or more, further preferably 80 % by mass or more, particularly preferably 90 % by mass or more, and most preferably 100 % by mass of the rubber component.

The rubber composition may contain other types of rubber as long as they do not impair the effects of this disclosure.

- Syndiotactic 1,2-polybutadiene

The rubber composition also contains syndiotactic 1,2-polybutadiene (sPB) having a crystal content of 7 J/g to 40 J/g and a number average molecular weight of $3.0 \times 10^4$ or more. By containing the sPB together with the natural rubber and/or synthetic isoprene rubber, the above-described double network can be formed in the rubber composition after vulcanization. When it is applied to a tire, the wear resistance and the cut resistance can be improved while maintaining good fuel efficiency.

The syndiotactic 1,2-polybutadiene has a crystal content of 7 J/g to 40 J/g. This is because, by setting the crystal content of the sPB to 7 J/g or more, the above-described double network can be more reliably formed in the rubber composition after vulcanization, and the fuel efficiency, wear resistance, and cut resistance can be further improved when applied to a tire. From the same point of view, the crystal content of the sPB is preferably 15 J/g or more and more preferably 17 J/g or more. On the other hand, if the crystal content of the sPB is too large, the melting point of the sPB may become too high, rendering it difficult to set the vulcanization temperature to form the double network. In addition, if the crystal content is too large, the fracture elongation of the rubber may tend to decrease due to the crystals acting as fracture nuclei. From this point of view, it is set to 40 J/g, preferably 36 J/g or less, and more preferably 31 J/g or less.

The crystal content of the sPB is the amount of heat of fusion, and it is an index indicating how much the sPB is crystallized. It can be derived from the melting peak measured with a differential scanning calorimeter.

From the viewpoint that the above-described double network can be more reliably formed in the rubber composition after vulcanization, and the fuel efficiency, wear resistance, and cut resistance when applied to a tire can be further improved, the syndiotactic 1,2-polybutadiene is required to have a number average molecular weight of $3.0 \times 10^4$ or more.

From the same point of view, the number average molecular weight of the sPB may be $5.0 \times 10^4$ or more, $6.5 \times 10^4$ or more, $8.9 \times 10^4$ or more, $10.0 \times 10^4$ or more, $11.0 \times 10^4$ or more, $12.0 \times 10^4$ or more, $13.0 \times 10^4$ or more, $14.0 \times 10^4$ or more, $15.0 \times 10^4$ or more, $16.0 \times 10^4$ or more, $17.0 \times 10^4$ or more, $17.9 \times 10^4$ or more, $18.0 \times 10^4$ or more, $19.0 \times 10^4$ or more, or $20.0 \times 10^4$ or more. On the other hand, from the viewpoints of crack growth resistance and preventing deterioration of riding comfort when applied to a tire, the sPB preferably has a number average molecular weight of $50.0 \times 10^4$ or less. From the same point of view, the number average molecular weight of the sPB may be $40.0 \times 10^4$ or less, $39.0 \times 10^4$ or less, $38.0 \times 10^4$ or less, $37.0 \times 10^4$ or less, $36.0 \times 10^4$ or less, $35.0 \times 10^4$ or less, $34.7 \times 10^4$ or less, $34.0 \times 10^4$ or less, $33.0 \times 10^4$ or less, $32.0 \times 10^4$ or less, $31.0 \times 10^4$ or less, or $30.0 \times 10^4$ or less.

In the syndiotactic 1,2-polybutadiene, the content of 1,2-bond in the sPB (the content of 1,2-bond in the microstructure of the sPB) is preferably 80 % by mass or more and more preferably 85 % by mass or more. This is because in this case, the above-described double network can be more reliably formed in the rubber composition after vulcanization, and the fuel efficiency, wear resistance, and cut resistance when applied to a tire can be further improved. From the same point of view, the content of 1,2-bond in the sPB may be 90 % by mass or more, 91 % by mass or more, 92 % by mass or more, 93 % by mass or more, 94 % by mass or more, or 95 % by mass or more.

In this disclosure, the content of 1,2-bond in the sPB can be determined by $^1$H and $^{13}$C nuclear magnetic resonance (NMR) analysis.

In the syndiotactic 1,2-polybutadiene, the syndiotacticity of 1,2-bond of the sPB is preferably 60 % or more and more preferably 65 % or more. This is because in this case, the above-described double network can be more reliably formed in the rubber composition after vulcanization, and the fuel efficiency, wear resistance, and cut resistance when applied to a tire can be further improved. From the same point of view, the syndiotacticity of 1,2-bond of the sPB may be 70 % or more, 75 % or more, 80 % or more, 85 % or more, 90 % or more, 95 % or more, or 100 %.

In this disclosure, the syndiotacticity of 1,2-bond of the sPB can be determined by $^1$H and $^{13}$C nuclear magnetic resonance (NMR) analysis.

The syndiotactic 1,2-polybutadiene may be a copolymer obtained by copolymerizing 1,3-butadiene and a small amount of conjugated diene such as 1,3-pentadiene and 1-pentyl-1,3-butadiene, or it may be a homopolymer of 1,3-butadiene.

When the sPB contains a unit derived from a conjugated diene other than 1,3-butadiene, the ratio of a unit derived from 1,3-butadiene in all repeating units of the sPB may be 80 % or more, 85 % or more, 90 % or more, 95 % or more, 98 % or more, or 99 % or more in one embodiment.

Although the melting point of the syndiotactic 1,2-polybutadiene is not particularly limited, it is preferably 85 °C to 180 °C from the viewpoint of further improving the wear resistance and cut resistance of the rubber composition. By setting the melting point of the sPB to 180 °C or lower, the crystallization of the sPB is facilitated during vulcanization of the rubber composition, and the above-described double network can be more reliably formed in the rubber composition after vulcanization. From the same point of view, the melting point of the sPB may be 170 °C or lower or 160 °C or lower. On the other hand, by setting the melting point of the sPB to 85 °C or higher, it is possible to suppress deterioration in the heat resistance and strength of the vulcanized rubber. From the same point of view, the melting point of the sPB may be 90 °C or higher or 100 °C or higher.

The content of the syndiotactic 1,2-polybutadiene in the rubber composition is not particularly limited, and it can be appropriately changed according to the required cut resistance and other properties. For example, from the viewpoint of further improving the fuel efficiency, wear resistance, and cut resistance of the tire, the content of the sPB is preferably 5 parts by mass to 40 parts by mass with respect to 100 parts by mass of the rubber component. When the content of the sPB is 5 parts by mass or more with respect to 100 parts by mass of the rubber component, the energy dissipation effect is enhanced, thereby obtaining better wear resistance and cut resistance. From the same point of view, the content of the sPB may be 10 parts by mass or more or 20 parts by mass or more with respect to 100 parts by mass of the rubber component. On the other hand, when the content of the sPB is 40 parts by mass or less with respect to 100 parts by mass of the rubber component, deterioration of fuel efficiency can be suppressed.

A method of obtaining the sPB is not particularly limited, and the sPB may be produced by oneself or may be a commercially available product.

For example, it can be obtained by polymerizing a 1,3-butadiene monomer in an organic solvent containing an aliphatic solvent using an iron-based catalyst composition, a chromium-based catalyst composition, a cobalt-based catalyst composition, or the like. Specifically, it can be prepared with the polymerization methods described in, for example, JP 2006-063183 A, JP 2000-119324 A, JP 2004-528410 A, JP 2005-518467 A, JP 2005-527641 A, JP 2009-108330 A, JP H07-25212 A, JP H06-306207 A, JP H06-199103 A, JP H06-92108 A, and JP H06-87975 A.

Among these catalyst compositions, the iron-based catalyst composition is preferred because it can more reliably control the crystal content of the sPB in the range of 7 J/g to 40 J/g and the number average molecular weight in the range of $3.0 \times 10^4$ or more.

Example of the iron-based catalyst composition include a catalyst composition obtained by mixing (a) an iron-containing compound, (b) an $\alpha$-acylphosphonic acid diester and (c) an organoaluminum compound, a catalyst composition obtained by mixing (a) an iron-containing compound, (b) an $\alpha$-acylphosphonic acid diester, (c) an organoaluminum compound and other organometallic compounds or a Lewis base, and a catalyst composition including (a) an iron-containing compound, (b) a dihydrocarbyl hydrogen phosphite and (c) an organoaluminum compound.

The (a) iron-containing compound is not particularly limited, and preferable examples include iron carboxylates, organic iron phosphates, organic iron phosphonates, organic iron phosphinates, iron carbamates, iron dithiocarbamates, iron xanthates, iron $\alpha$-diketonates, iron alkoxides or aryloxides, and organic iron compounds.

Among these compounds, the iron-based catalyst composition more preferably contains tris(2-ethylhexanoate) iron (III), bis(2-ethylhexyl) phosphite, triisobutylaluminum, tri-n-butylaluminum, and tri-n-octylaluminum, from the viewpoint of more reliably controlling the crystal content of the sPB in the range of 7 J/g to 40 J/g and the number average molecular weight in the range of $3.0 \times 10^4$ or more.

Examples of the chromium-based catalyst composition include a three-component catalyst system containing (a) a chromium-containing compound, (b) an alkylaluminum hydride compound, and (c) a hydrogen phosphite. Various chromium-containing compounds can be used as the (a) component of the chromium-based catalyst composition according to this disclosure. In general, it is advantageous to use a chromium-containing compound that is soluble in hydrocarbon solvents, such as aromatic, aliphatic or alicyclic hydrocarbons, but it is also acceptable that an insoluble chromium-containing compound that is simply dispersed in a polymerization medium produces a catalytically active species. Therefore, no limitations should be placed on the chromium-containing compound to ensure solubility.

Examples of chromium in the (a) chromium-containing compound include, but are not limited to, chromium carboxylates, chromium β-diketonates, chromium alkoxides or aryloxides, chromium halides, pseudo chromium halides, and organochromium compounds.

Examples of the cobalt-based catalyst composition include a catalyst system containing soluble cobalt, such as cobalt octoate, cobalt 1-naphtate and cobalt benzoate, an organoaluminum compound, such as trimethylaluminum, triethylaluminum, tributylaluminum and triphenylaluminum, and carbon disulfide.

Examples of commercial products of the sPB include JSR RB® (JSR RB is a registered trademark in Japan, other countries, or both) series such as JSR RB® 810, 820, 830, and 840 of JSR Corporation.

- Filler

The rubber composition preferably further contains a filler in addition to the rubber component and the syndiotactic 1,2-polybutadiene described above.

By containing the filler, the durability such as the wear resistance and cut resistance of the rubber composition can be further improved.

The filler is not particularly limited, and examples thereof include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, and barium sulfate. Among these, it is preferable to contain at least carbon black from the viewpoint of improving the durability. These fillers may be used alone or in combination of two or more. For example, the filler may only contain carbon black.

For example, the content of the filler is preferably 10 parts by mass to 160 parts by mass, more preferably 15 parts by mass to 140 parts by mass, further preferably 15 parts by mass to 120 parts by mass, and particularly preferably 20 parts by mass to 120 parts by mass with respect to 100 parts by mass of the rubber component.

The carbon black is not particularly limited, and examples thereof include carbon black of SAF, ISAF, IISAF, N339, HAF, FEF, and GPF grades. The nitrogen adsorption specific surface area ($N_2SA$, measured according to JIS K 6217-2:2001) of the carbon black is preferably 20 $m^2$/g to 160 $m^2$/g, more preferably 25 $m^2$/g to 160 $m^2$/g, still more preferably 25 $m^2$/g to 150 $m^2$/g, and particularly preferably 30 $m^2$/g to 150 $m^2$/g. The dibutyl phthalate oil absorption (DBP, measured according to JIS K 6217-4: 2008) of the carbon black is preferably 40 ml/100 g to 160 ml/100 g, more preferably 40 ml/100 g to 150 ml/100 g, still more preferably 50 ml/100 g to 150 ml/100 g, even more preferably 60 ml/100 g to 150 ml/100 g, and particularly preferably 60 ml/100 g to 140 ml/100 g. The carbon black may be used alone or in combination of two or more.

From the viewpoint of further increasing the durability of the rubber composition, the content of the carbon black is preferably 10 parts by mass or more, more preferably 20 parts by mass or more, and particularly preferably 30 parts by mass or more with respect to 100 parts by mass of the rubber component. On the other hand, from the viewpoint of suppressing deterioration of the low-loss properties of the rubber composition and deterioration of the fuel efficiency of the pneumatic tire, the content of the carbon black is preferably 70 parts by mass or less and more preferably 60 parts by mass or less with respect to 100 parts by mass of the rubber component.

Examples of the silica include wet silica (hydrous silicic acid), dry silica (anhydrous silicic acid), calcium silicate, and aluminum silicate, among which wet silica is preferable.

The wet silica preferably has a BET specific surface area (measured according to ISO 5794/1) of 40 $m^2$/g to 350 $m^2$/g. Silica having a BET specific surface area within this range has the advantage of being able to achieve both rubber reinforcing properties and dispersibility in the rubber component. From this point of view, silica having a BET specific surface area in a range of 80 $m^2$/g to 300 $m^2$/g is more preferable. Commercially available products such as "Nipsil AQ" and "Nipsil KQ" manufactured by Tosoh Silica Corporation and "Ultrasil VN3" manufactured by Evonik Industries AG can be used as such silica. The silica may be used alone or in combination of two or more.

The filler may contain carbon black but no silica. In this case, the effect of reducing rolling resistance can be further improved, which is preferable.

When silica is used as the filler, it is preferable to further contain a silane coupling agent, such as bis(3-triethoxysilylpropyl)polysulfide, bis(3-triethoxysilylpropyl)disulfide and 3-trimethoxysilylpropylbenzothiazyltetrasulfide in the rubber composition before vulcanization. The content of the silane coupling agent in the rubber composition before vulcanization varies depending on the type of the silane coupling agent and the like, but it is preferably in a range of 2 parts by mass to 20 parts by mass with respect to 100 parts by mass of the silica.

- Other components

In addition to the above-described rubber component, syndiotactic 1,2-polybutadiene and filler, the rubber composition may appropriately contain other components commonly used in the rubber industry depending on the required performance.

The rubber composition before vulcanization may contain a vulcanizing agent (cross-linking agent), a vulcanization accelerator, a vulcanization retarder, an age resistor, a reinforcing agent, a softener, a vulcanizing co-agent, a colorant, a flame retardant, a lubricant, a foaming agent, a plasticizer, a processing aid, an antioxidant, an anti-scorch agent, a ultraviolet rays protecting agent, an antistatic agent, a color protecting agent, oil, and the like, as the other components. Each of these may be used alone or in combination of two or more.

In a case of sulfur cross-linking, examples of the vulcanizing agent include sulfur (powder sulfur or the like), and sulfur-containing cross-linking agents such as morpholine disulfide and polymer polysulfides. In a case of non-sulfur cross-linking, examples thereof include peroxide cross-linking such as tert-butyl hydroperoxide, 1,1,3,3-tetramethylbutyl hydroperoxide, cumene hydroperoxide, dicumyl peroxide, di-tert-butyl peroxide, diisopropylbenzene hydroperoxide, and tert-butyl cumyl peroxide.

Examples of the vulcanization accelerator include a sulfenamide-based vulcanization accelerator, a thiazole-based vulcanization accelerator, a guanidine-based vulcanization accelerator, a thiourea-based vulcanization accelerator, a thiuram-based vulcanization accelerator, a dithiocarbamine-based vulcanization accelerator, and a xanthate-based vulcanization accelerator.

Examples of a co-crosslinking agent in the peroxide cross-linking include ethylene glycol dimethacrylate, trimethylolpropane trimethacrylate, zinc methacrylate, and magnesium methacrylate.

A method of preparing the rubber composition before vulcanization is not particularly limited, and a known method can be used. For example, it can be obtained by adding each compounding component simultaneously or in an arbitrary order and kneading them using a kneader such as a Banbury mixer, a roll, or an internal mixer.

- Method of producing rubber composition>

Methods of obtaining the rubber composition (hereinafter, it may be referred to as "unvulcanized rubber composition") and the vulcanized rubber composition ((hereinafter, it may be referred to as "rubber composition after vulcanization")) are not particularly limited.

For example, from the viewpoint of ensuring the formation of the above-described double network in the rubber composition after vulcanization, it is possible to use production conditions including a process of kneading each component by setting the temperature at which the syndiotactic 1,2-polybutadiene and the natural rubber and/or synthetic isoprene rubber are kneaded (during kneading in a masterbatch kneading stage) to a temperature 10 °C to 100 °C higher than the melting point of the sPB, and a process of vulcanizing the obtained unvulcanized rubber composition at a temperature equal to or higher than the melting point of the sPB, in preparing the unvulcanized rubber composition.

Reasons for limiting the temperature during kneading of the sPB and natural rubber and/or synthetic isoprene rubber in the production conditions are as follows. By setting the temperature during kneading to 10 °C to 100 °C, preferably 10 °C to 50 °C, more preferably 12 °C to 50 °C higher than the melting point of the sPB and performing kneading at this temperature, the sPB can be compatible with the rubber component.

After that, it is considered important to perform vulcanization at a temperature equal to or higher than the melting point of the sPB to form the above-described double network under the production conditions. The reason is as follows. By vulcanizing the obtained unvulcanized rubber composition at a temperature equal to or higher than the melting point of the sPB, the sPB becomes semi-compatible with the rubber component and is fixed as a network in the rubber component, thereby forming the above-described double network in the vulcanized rubber composition. However, this does not mean that the double network is not formed at all when the vulcanization is performed at a temperature lower than the melting point of the sPB. This is because even when the vulcanization is performed at a temperature lower than the melting point of the sPB, a part of the sPB can be melt to at least partially form a double network. For example, even at a temperature of -15 °C from the melting point or higher and lower than the melting point, it is considered that the double network can be at least partially formed.

As a result, the obtained rubber composition after vulcanization has excellent durability such as cut resistance without deteriorating the low heat generating properties.

When the sPB and the natural rubber and/or synthetic isoprene rubber are kneaded under the above-described production conditions (during kneading in a masterbatch kneading stage), and when the temperature during kneading reaches a temperature 10 °C higher than the melting point of the sPB, it is ensured that the sPB is compatible with the natural rubber and/or the synthetic isoprene rubber.

On the other hand, when the sPB and the natural rubber and/or synthetic isoprene rubber are kneaded under the above-described production conditions (during kneading in a masterbatch kneading stage), and when the temperature during kneading is 100 °C higher than the melting point of the sPB or lower, preferably 50 °C higher than the melting point of the sPB or lower, it is possible to suitably prevent the rubber component and the sPB from thermal aging, which can contribute to improving the cut resistance of the obtained vulcanized rubber composition.

For the kneading of the sPB and the natural rubber and/or the synthetic isoprene rubber in the above-described production method, a kneader such as a Banbury mixer, a roll, an internal mixer, or the like can be used.

The temperature during kneading in the above-described production conditions refers to the temperature of a masterbatch when a masterbatch of the unvulcanized rubber composition is discharged from the kneading device. Specifically, in masterbatch kneading, it is the temperature obtained by measuring the internal temperature of the masterbatch immediately after it is discharged from the kneading device, using a temperature sensor or the like. However, if there is temperature measuring means for the unvulcanized rubber composition in the kneading device, the temperature of the masterbatch may be measured when it is discharged.

As used herein, the masterbatch is a rubber composition obtained by kneading the rubber component and the sPB in a kneading stage in which no cross-linking agent or vulcanization accelerator is added.

The vulcanization temperature in the above-described production conditions is preferably a temperature equal to or higher than the melting point of the sPB. The reason is as follows. If the vulcanization temperature is equal to or higher than the melting point of the sPB, it is thermodynamically difficult for the sPB in the rubber component to obtain a crystalline domain structure, and the above-described double network can be more reliably formed.

The temperature during vulcanization in the above-described production conditions means the maximum temperature reached during the vulcanization from the start of vulcanization (usually the set temperature of a vulcanization device).

A known vulcanization system may be used for the vulcanization in the above-described production method, and it may be a sulfur vulcanization system or a non-sulfur vulcanization system.

Although the pneumatic tire of this disclosure uses the above-described rubber composition, there is no particular limitation on the portion to which the rubber composition is applied.

For example, it can be used in at least one of a tread portion, a shoulder portion, a sidewall portion, a bead portion, a belt layer (belt coating rubber) and a carcass (ply coating rubber). Among these portions, it can be suitably used for portions requiring high durability (particularly wear resistance and cut resistance) such as a tread portion and a sidewall portion. Further, it is more preferable to use it in a belt layer (belt coating rubber) among these portions because the effect of improving durability can be remarkably exhibited.

(5) Other embodiments

An embodiment of this disclosure has been described above, but this disclosure is not limited to the above embodiment.

For example, in the above embodiment, the pneumatic tire 10 satisfies the relationship $0.56 \leq RD/OD \leq 0.66$, but this relationship does not necessarily have to be satisfied. In the above embodiment, the folded end portion 41 of the carcass 40 is provided so as to be wound along the bead core 61, but the folded end portion 41 does not have to be wound along the bead core 61. In the above embodiment, the sheath belt 52 is spirally wound around the core belt 51 along the tire circumferential direction at a predetermined distance equal to or larger than the width of the sheath belt 52 and covers the outer surface of the core belt 51 in the tire radial direction and the inner surface of the core belt 51 in the tire radial direction, but the sheath belt 52 does not necessarily have to be configured in this way. For example, the sheath belt 52 may simply be spirally wound along the tire circumferential direction without leaving a predetermined distance therebetween, and it may not completely cover the outer surface of the core belt 51 in the tire radial direction and the inner surface of the core belt 51 in the tire radial direction. The core belt 51 may not necessarily be provided. That is, the sheath belt 52 may simply be spirally wound along the tire circumferential direction without covering the core belt 51.

The tire of this disclosure can be molded by steam vulcanization or electric vulcanization.

EXAMPLES

The following describes this disclosure in more detail with reference to examples, but this disclosure is not limited to the following examples.

(sPB)

The syndiotactic 1,2-polybutadiene used in the examples was "JSR RB® 840" manufactured by JSR Corporation. This sPB had a 1,2-bond content of 84 mas%, a melting point of 122 °C, a number average molecular weight of $6.6 \times 10^4$, and a crystal content of 21 J/g.

The melting point, weight average number average molecular weight (Mw), 1,2-bond content and degree of crystallinity of the sPB were measured with the following methods.

(Melting point of syndiotactic 1,2-polybutadiene)

A sample of the syndiotactic 1,2-polybutadiene was placed in a differential scanning calorimetry (DSC) device, and the melting point was measured with a method in which the melting peak temperature of a DSC curve when the temperature was raised at a heating rate of 10 °C/min was taken as the melting point.

(Weight average number average molecular weight (Mw))

It was measured by gel permeation chromatography [GPC: HLC-8220/HT manufactured by Tosoh Corporation] using a differential refractometer as a detector, and the result was indicated in terms of polystyrene with monodisperse polystyrene as a standard. The column was GMHHR-H(S)HT [manufactured by Tosoh Corporation], the eluent was trichlorobenzene, and the measurement temperature was 140 °C.

(1,2-Bond content of butadiene, syndiotacticity of 1,2-bond)

They were determined by $^1$H and $^{13}$C nuclear magnetic resonance (NMR) analysis of the syndiotactic 1,2-polybutadiene.

(Crystal content)

The crystal content (J/ g) was obtained by calculating the area of the melting peak observed from -100 °C to 200 °C when measuring the melting point, using differential scanning calorimetry (manufactured by TA Instruments).

<Examples 1 to 3 and Comparative Examples 1 to 2>

A non-productive kneading process (temperature during kneading: 160 °C) was performed with the composition listed in Table 1. Next, the components listed in Table 1 were added to a masterbatch obtained from the non-productive kneading process, and a productive vulcanization process (temperature during vulcanization: 150 °C) was performed to obtain a sample of each vulcanized rubber composition.

Regarding the sample of each vulcanized rubber composition, it is considered that a mesh-like three-dimensional network (double network) having a portion of sPB crystal and a portion where the rubber component and the sPB were compatible with each other had been formed in the vulcanized rubber in the samples of Examples 1 to 3, based on the presence or absence of the sPB, the melting point of the sPB, and the conditions of the vulcanization temperature.

The compositions in Table 1 are listed in terms of the amount (parts by mass) with respect to 100 parts by mass of the rubber component.

<Evaluation>

The rolling resistance, crack growth resistance, and wear resistance of the obtained sample of each vulcanized rubber composition were evaluated with the following methods. The results are listed in Table 1.

(1) Fuel efficiency

The tangent loss tanδ of the sample of each vulcanized rubber composition was measured using a viscoelasticity meter (manufactured by Ueshima Seisakusho Co., Ltd.) under conditions of a frequency of 15 Hz, a tensile strain of 2 %, and a temperature of 50 °C.

The evaluation result is indicated in an index, where the reciprocal of the measured value of tanδ is taken and the index is a value when the reciprocal of Comparative Example 1 is 100. As the index increases, the tanδ decreases, indicating the fuel efficiency improves.

(2) Crack growth resistance

The tear strength (J/m$^2$) of the sample of each vulcanized rubber composition was measured in a trouser shape according to JIS K 6252 using a tensile tester manufactured by Shimadzu Corporation.

Regarding the evaluation, the index value of Comparative Example 2 is indicated as an index when the tear strength of Comparative Example 1 is 100, and the index value is indicated when the tear strength of Comparative Example 1 is 100. As the index increases, the tear strength increases, indicating the crack growth resistance improves.

Table 1

| No. | | Comparative Example 1 | Comparative Example 2 | Example 1 | Example 2 | Example 3 |
|---|---|---|---|---|---|---|
| Composition | Natural rubber | 100 | 100 | 100 | 100 | 100 |
| | Carbon black *1 | 50 | 60 | 50 | 50 | 40 |
| | Silica *2 | - | - | - | - | 10 |
| | sPB | - | - | 20 | 30 | 20 |
| | Stearic acid | 2 | 2 | 2 | 2 | 2 |
| | Zinc oxide | 4 | 4 | 4 | 4 | 4 |
| | Age resistor | 1 | 1 | 1 | 1 | 1 |
| | Sulfur | 5 | 5 | 5 | 5 | 5 |
| | Vulcanization accelerator☐ | 1 | 1 | 1 | 1 | 1 |
| | Fatty acid cobalt salt | 1 | 1 | 1 | 1 | 1 |
| Evaluation | Fuel efficiency | 100 | 85 | 115 | 125 | 120 |
| | Crack growth resistance | 100 | 110 | 120 | 130 | 140 |
| *1 Carbon black: LS-HAF grade carbon black *2 Silica: "Nipsil AQ" manufactured by Tosoh Silica Corporation | | | | | | |

From the results in Table 1, it is understood that the vulcanized rubber composition of each example according to this disclosure achieves both fuel efficiency and crack growth resistance at high levels.

INDUSTRIAL APPLICABILITY

According to this disclosure, it is possible to provide a pneumatic tire that has excellent durability and achieves both high load capacity and space-saving properties.

REFERENCE SIGNS LIST

1        vehicle
10       pneumatic tire
20       tread
21, 22   circumferential main groove
26, 27   shoulder portion
30       tire side portion
40       carcass
41       folded end portion

**Claims**

1. A pneumatic tire that is mounted on a vehicle, comprising a tread in contact with a road surface and a belt layer provided inside the tread in a tire radial direction, wherein

   the pneumatic tire has an outer diameter of 350 mm or more and 600 mm or less,
   when a rim width of a rim wheel assembled to the pneumatic tire is defined as RW, and a tire cross-sectional width of the pneumatic tire is defined as SW, they satisfy a relationship of

$$0.78 \leq RW/SW \leq 0.88,$$

and

the pneumatic tire uses a rubber composition containing a rubber component containing 50 % by mass or more of either or both of natural rubber and synthetic isoprene rubber, and syndiotactic 1,2-polybutadiene, where the syndiotactic 1,2-polybutadiene has a crystal content of 7 J/g to 40 J/g and a number average molecular weight of $3.0 \times 10^4$ or more.

2. The pneumatic tire according to claim 1, wherein the belt layer comprises a sheath belt that is spirally wound along a tire circumferential direction.

3. The pneumatic tire according to claim 1 or 2, wherein a content of the syndiotactic 1,2-polybutadiene is 5 parts by mass to 40 parts by mass with respect to 100 parts by mass of the rubber component.

4. The pneumatic tire according to any one of claims 1 to 3, wherein the syndiotactic 1,2-polybutadiene has a crystal content of 15 J/g to 40 J/g and a number average molecular weight of $5.0 \times 10^4$ or more.

5. The pneumatic tire according to any one of claims 1 to 4, wherein the syndiotactic 1,2-polybutadiene has a melting point of 85 °C to 180 °C.

6. The pneumatic tire according to any one of claims 1 to 5, wherein the syndiotactic 1,2-polybutadiene has a 1,2-bond content of 80 % by mass or more.

7. The pneumatic tire according to any one of claims 1 to 6, wherein the rubber composition further contains a filler.

8. The pneumatic tire according to claim 7, wherein the filler contains at least carbon black.

9. The pneumatic tire according to claim 7 or 8, wherein a content of the carbon black in the rubber composition is 10 parts by mass to 70 parts by mass with respect to 100 parts by mass of the rubber component.

10. The pneumatic tire according to any one of claims 7 to 9, wherein the filler further contains silica.

11. The pneumatic tire according to any one of claims 1 to 10, wherein after vulcanization, a mesh-like three-dimensional network is formed in a matrix of the rubber component in the rubber composition, and the mesh-like three-dimensional network comprises a part of crystal of the sPB and a part where the rubber component and the sPB are compatible with each other.

12. The pneumatic tire according to claims 1 to 11, wherein the rubber composition is used for belt coating rubber.

# FIG. 1

# FIG. 2

Tire radial direction

Tire width direction

**FIG. 3**

# FIG. 4A

# FIG. 4B

# FIG. 5

<table>
<tr><td colspan="2" align="center">**INTERNATIONAL SEARCH REPORT**</td><td colspan="2">International application No.<br><br>PCT/JP2021/020249</td></tr>
</table>

**A. CLASSIFICATION OF SUBJECT MATTER**

Int.Cl. B60C1/00(2006.01)i, C08L7/00(2006.01)i, C08L9/00(2006.01)i, C08K3/04(2006.01)i, C08K3/36(2006.01)i, B60C3/00(2006.01)i, B60C9/18(2006.01)i, B60C9/20(2006.01)i

FI: B60C1/00C, B60C3/00Z, B60C9/18G, B60C9/20C, C08K3/04, C08K3/36, C08L7/00, C08L9/00

According to International Patent Classification (IPC) or to both national classification and IPC

**B. FIELDS SEARCHED**

Minimum documentation searched (classification system followed by classification symbols)

Int.Cl. B60C1/00, C08L7/00, C08L9/00, C08K3/04, C08K3/36, B60C3/00, B60C9/18, B60C9/20

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-136745 A (THE GOODYEAR TIRE AND RUBBER COMPANY) 11 July 2013 (2013-07-11), claims, examples I-III | 1-11 |
| Y | JP 2005-343334 A (SUMITOMO RUBBER INDUSTRIES, LTD.) 15 December 2005 (2005-12-15), paragraphs [0001]-[0009], [0033] | 1-11 |
| Y | JP 2020-15401 A (SUMITOMO RUBBER INDUSTRIES, LTD.) 30 January 2020 (2020-01-30), paragraph [0046], fig. 1 | 2 |
| Y | JP 2019-209746 A (BRIDGESTONE CORPORATION) 12 December 2019 (2019-12-12), paragraphs [0003], [0020] | 2 |
| A | JP 2016-216626 A (TOYO TIRE & RUBBER CO., LTD.) 22 December 2016 (2016-12-22), claims, examples | 1-12 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 August 2021 | 17 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | <br><br>Telephone No. |

Form PCT/ISA/210 (second sheet) (January 2015)

**EP 4 163 124 A1**

<table>
<tr><td colspan="2" align="center">INTERNATIONAL SEARCH REPORT</td><td colspan="2">International application No.<br>PCT/JP2021/020249</td></tr>
<tr><td colspan="4">C (Continuation).   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">JP 2014-84410 A (TOYO TIRE & RUBBER CO., LTD.) 12 May 2014 (2014-05-12), claims, examples</td><td>1-12</td></tr>
<tr><td>A</td><td colspan="2">JP 2018-95703 A (TOYO TIRE & RUBBER CO., LTD.) 21 June 2018 (2018-06-21), claims, examples</td><td>1-12</td></tr>
<tr><td>A</td><td colspan="2">JP 11-71480 A (BRIDGESTONE CORPORATION) 16 March 1999 (1999-03-16), comparative example 6, examples 12-14</td><td>1-12</td></tr>
<tr><td>A</td><td colspan="2">JP 2018-138435 A (THE YOKOHAMA RUBBER CO., LTD.) 06 September 2018 (2018-09-06), paragraphs [0034]-[0049], tables 2, 3</td><td>1-12</td></tr>
</table>

Form PCT/ISA/210 (second sheet) (January 2015)

**INTERNATIONAL SEARCH REPORT**
Information on patent family members

| International application No. |
|---|
| PCT/JP2021/020249 |

| | | |
|---|---|---|
| JP 2013-136745 A | 11 July 2013 | US 2013/0153102 A1<br>claims, examples I-III<br>EP 2607098 A1 |
| JP 2005-343334 A | 15 December 2005 | (Family: none) |
| JP 2020-15401 A | 30 January 2020 | (Family: none) |
| JP 2019-209746 A | 12 December 2019 | WO 2019/230496 A1 |
| JP 2016-216626 A | 22 December 2016 | US 2016/0340477 A1<br>claims, examples<br>DE 102016208727 A<br>CN 106167568 A |
| JP 2014-84410 A | 12 May 2014 | (Family: none) |
| JP 2018-95703 A | 21 June 2018 | US 2018/0163030 A1<br>claims, examples<br>DE 102017220817 A |
| JP 11-71480 A | 16 March 1999 | (Family: none) |
| JP 2018-138435 A | 06 September 2018 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003093337 A
- JP 2006063183 A
- JP 2000119324 A
- JP 2004528410 A
- JP 2005518467 A
- JP 2005527641 A
- JP 2009108330 A
- JP H0725212 A
- JP H06306207 A
- JP H06199103 A
- JP H0692108 A
- JP H0687975 A